# FASCICULE DE BREVET EUROPEEN

(11) **EP 0 717 484 B1**
(45) Date de publication et mention de la délivrance du brevet: **13.10.1999**
(21) Numéro de dépôt: 95402778.5
(22) Date de dépôt: 11.12.1995
(51) Int. Cl.: H02G 5/06, H02B 13/045

(54) **Bride à bossage pour câble triphasé à isolation gazeuse à longue distance**
Isolierende Trägerscheibe für eine gasisolierte Dreiphasen-Fernleitung
Insulating support disc for a long distance, gasinsulated triphase cable

(30) Priorité: 15.12.1994 FR 9415131
(43) Date de publication de la demande: 19.06.1996
(73) Titulaire: GEC ALSTHOM T ET D SA, 75016 Paris (FR)
(72) Inventeur: Tixier,René, F-69008 Lyon (FR); Pham,Van Doan, F-69330 Meyzieu (FR)
(74) Mandataire: Gosse, Michel

(56) Documents cités:
- WO-A-91/00633
- FR-A- 2 125 198
- US-A- 3 331 911

## Description

La présente invention est relative à une bride destinée à relier deux tronçons d'un câble triphasé à isolation gazeuse à longue distance.

Un câble triphasé à isolation gazeuse à longue distance connu comprend à l'intérieur d'une enveloppe cylindrique en acier, trois conducteurs de phase disposés parallèlement à l'axe de l'enveloppe. Une enveloppe en aluminium de même longueur est disposée entre les conducteurs et l'enveloppe en acier, très près de cette dernière, et constitue un écran magnétique permettant de réduire l'échauffement de l'enveloppe en acier. Il est indiqué que le câble est constitué de plusieurs compartiments montés en usine et comprenant chacun un élément d'enveloppe en acier, un élément d'enveloppe en aluminium et trois conducteurs maintenus par des bras isolants; un tel compartiment a une longueur comprise entre 5 et 12 mètres. Les compartiments sont soudés bout à bout, un ensemble de dix compartiments par exemple formant un tronçon de câble. Le câble est rempli de gaz isolant, tel que l'azote sous pression. Le document indique également que deux tronçons sont reliés par des pièces d'extrémité équipées de pièces particulières permettant la dilatation des conducteurs et des enveloppes, le désassemblage de deux tronçons adjacents et l'étanchéité individuelle des tronçons. Il est également mentionné que les éléments d'extrémité comportent des vannes pour le remplissage et la vidange du gaz isolant.

La demande de brevet français FR-A-2 125 198, publiée le 29 septembre 1972, décrit une bride conforme au préambule de la revendication 1. Dans ce document, on relève qu'un joint torique est disposé à l'intérieur de l'alésage principal et coulisse autour de la tige de déplacement du clapet pour rendre étanche vis à vis de l'extérieur du câble le passage de communication entre les deux tronçons adjacents. Un tel agencement ne permet pas de mettre en communication l'un ou les deux tronçons avec l'extérieur.

Le brevet américain US-A-3 331 911, publié le 18 juillet 1967, décrit un assemblage de deux tronçons adjacents au moyen d'une bride circulaire et étanche, dans lequel trois vannes sont montées à l'extérieur du câble pour mettre en communication les deux tronçons adjacents, les deux tronçons, ou l'un indépendamment de l'autre, en communication avec l'extérieur.

L'invention se propose d'équiper le compartiment d'assemblage entre deux tronçons d'une bride permettant, outre de servir de support à des cônes isolants pour le maintien des conducteurs et aux éléments d'assemblage des deux tronçons adjacents, d'incorporer les vannes pour le remplissage du tronçon en gaz isolant, pour la vidange de ce tronçon en gaz ainsi que pour la mise sous vide du tronçon avant remplissage en gaz isolant.

A cet effet, l'invention a pour objet une bride à bossage destinée à équiper un compartiment d'assemblage de deux tronçons adjacents d'un câble triphasé à isolation gazeuse à longue distance, qui comprend dans un bossage un passage d'une vanne commandable de l'extérieur mettant en communication les volumes intérieurs des deux tronçons adjacents, ledit passage pouvant être obturé au moyen d'un premier clapet s'appuyant sur un premier siège de la vanne constitué par un épaulement intérieur d'un alésage principal qui s'étend suivant une direction axiale et qui s'ouvre sur l'extérieur, ledit clapet étant fixé à une première tige débouchant dans ledit alésage du côté extérieur, ladite première tige se déplaçant par vissage à l'intérieur d'un alésage axial d'une pièce cylindrique disposée axialement de manière fixe à l'intérieur de l'alésage principal, caractérisée en ce que ladite pièce cylindrique est traversée par des alésages axiaux débouchant d'une part dans ledit passage et d'autre part dans l'alésage principal du côté extérieur, une extrémité du côté extérieur desdits alésages axiaux constituant un second siège de la vanne obturable par un second clapet fixé à une seconde tige débouchant dans ledit alésage du côté extérieur.

Dans un mode préféré de réalisation, la seconde tige est un tube coaxial se vissant sur ladite pièce cylindrique.

Ledit alésage principal est muni d'un couvercle étanche muni d'un bouchon pouvant être retiré ou replacé au moyen d'une première clé.

Ladite première tige est munie de moyen d'accouplement à une seconde clé manoeuvrable de l'extérieur du câble.

Ladite seconde tige est munie de moyen d'accouplement à une troisième clé manoeuvrable de l'extérieur du câble.

Le bouchon peut être remplacé par une quatrième clé constituée d'un tube muni à une extrémité de moyens d'accouplement à l'extrémité de ladite seconde tige et à l'autre extrémité de moyens de liaison à une pompe à vide, ledit tube étant muni de moyens pour être fixé de manière étanche en lieu et place du bouchon et d'une vanne placée entre les moyens de liaison à la pompe à vide et les moyens de fixation étanche en lieu et place du bouchon.

Le passage comporte à son côté bossage un filtre contre la poussière.

L'invention est expliquée en détail par la description d'un mode préféré de réalisation, en référence au dessin annexé dans lequel:
- la figure 1A représente un morceau de câble à longue distance,
- la figure 1B est une vue agrandie de la figure 1, illustrant le fonctionnement des compartiments de démontage, - la figure 2 est une vue du câble enterré,
- les figures 3 et 4 illustrent les manoeuvres des vannes lors d'une opération de démontage d'un tronçon,
- les figures 5 à 7 illustrent les opérations de dépose d'un tronçon à remplacer,
- la figure 8 est une vue en coupe longitudinale d'une portion de câble avec son compartiment de démontage montrant la bride selon l'invention,
- la figure 9 est une vue en coupe selon la ligne IX-IX de la figure 8,
- la figure 10 est une vue détaillée en coupe de la vanne,
- la figure 11 représente une clé pour la mise sous vide d'un tronçon.

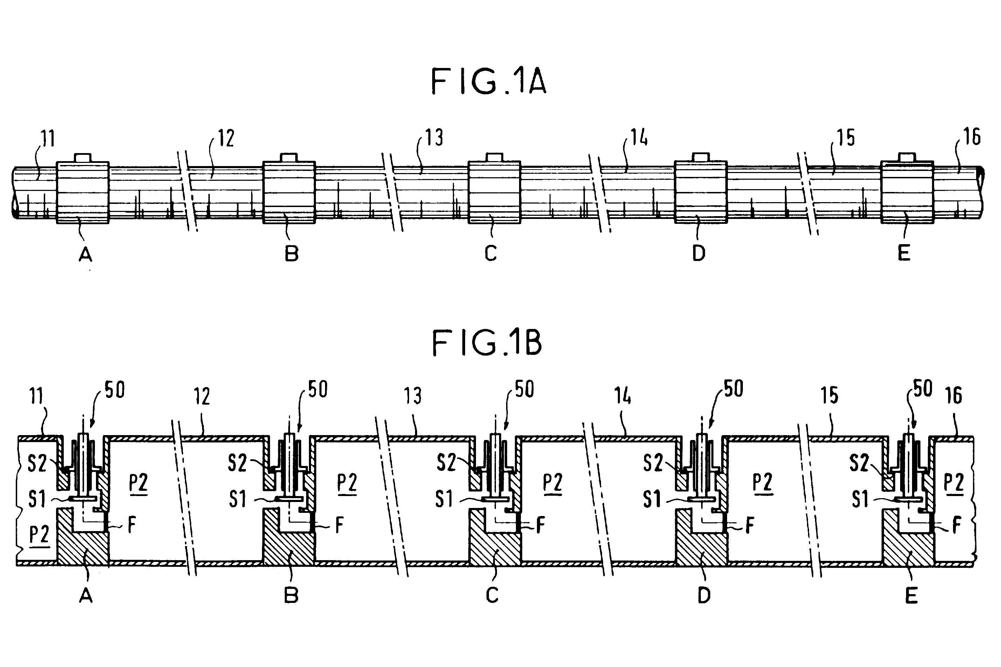

La figure 1A montre un morceau de câble à isolation gazeuse à longue distance comprenant des tronçons 11, 12, 13, 14, 15, 16, de longueur voisine de 100 mètres, reliés entre eux par des compartiments A, B, C, D, E, de démontage; dans ce qui suit, on supposera que c'est le tronçon 14, compris entre les compartiments de démontage C et D, qui doit être démonté, par exemple en vue de son remplacement.

On note que lors de la réalisation en usine des tronçons, chaque tronçon est muni d'un compartiment de démontage; dans la figure le tronçon 12 possède le compartiment A, le tronçon 13 possède le compartiment B, plus généralement un tronçon possède le compartiment placé à sa gauche dans le figure. L'isolement électrique est assuré de préférence par l'azote, sous une pression de fonctionnement de 12000 hectopascals par exemple.

Comme le montre la figure 1B, chaque compartiment possède une vanne 50 ayant deux sièges obturables S1 et S2. L'ouverture et la fermeture des sièges peut être effectué de l'extérieur, au moyen d'une clé à tube placée à l'extrémité d'un manche. Les sièges S1 sont ouverts pour le passage du gaz d'isolement; en fonctionnement normal, qui est le cas représenté dans la figure 1B, tous les sièges S1 sont ouverts, de sorte que le gaz d'isolement, à une pression P2 d'azote de 12000 hectopascals, circule librement entre les tronçons, à travers des filtres F dont sont munis les compartiments de démontage. Les sièges S2 servent à mettre l'intérieur du tronçon en communication avec l'atmosphère. Dans la figure 1B, les sièges S2 sont alors tous obturés.

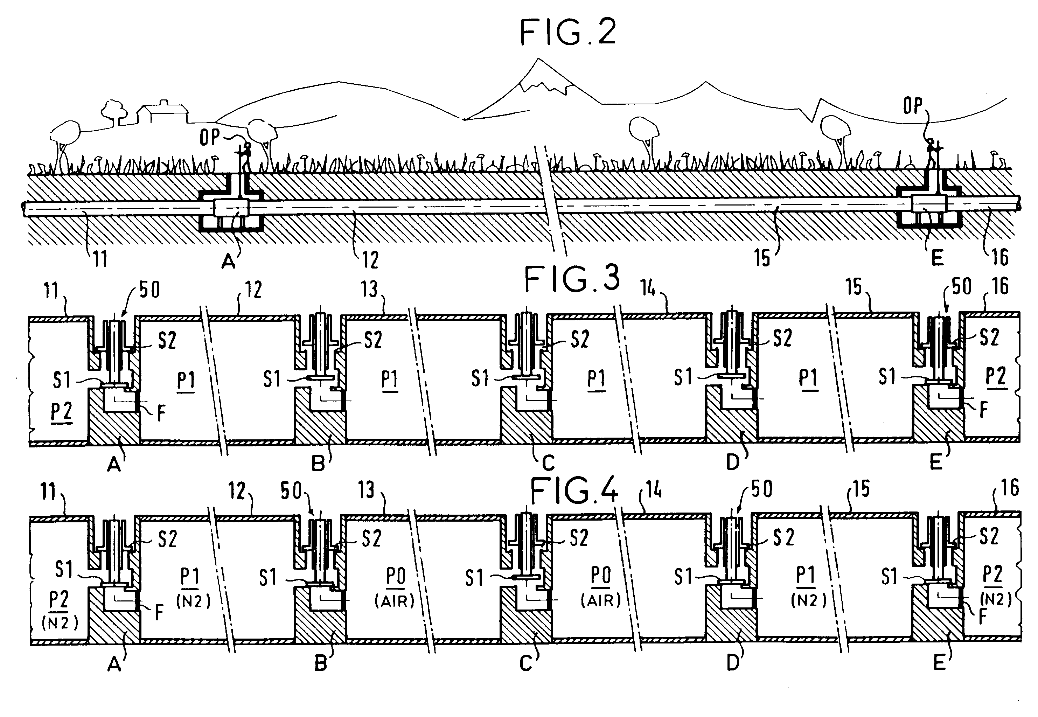

La figure 2 montre le câble enterré; le tronçon 14 devant être démonté, l'opérateur OP agit sur les éléments A et E pour fermer leur siège S1 et permettre de séparer les quatre tronçons AB, BC, CD et DE du circuit d'alimentation en gaz avant le démontage du tronçon CD.

La figure 3 illustre l'opération précitée; elle montre les sièges S1 de A et E fermés, et les sièges S2 de B, C et D ouverts jusqu'à obtention dans les tronçons AB, BC, CD et DE d'une pression d'azote P1 égale à 1000 hectopascals, pour éviter l'entrée d'air humide dans les tronçons lors du démontage du tronçon CD.

La figure 4 illustre l'opération postérieure: les sièges S1 de B et D sont fermés, de sorte que les tronçons AB et DE conservent une atmosphère d'azote avec une pression P1 égale à 1000 hectopascals. Le siège S1 de C est maintenu ouvert et relié à une pompe à vide afin de vider l'azote contenu dans les tronçons BC et CD avant le démontage du tronçon CD. A la fin de cette opération, les tronçons BC et CD sont remplis d'air à la pression atmosphérique P0.

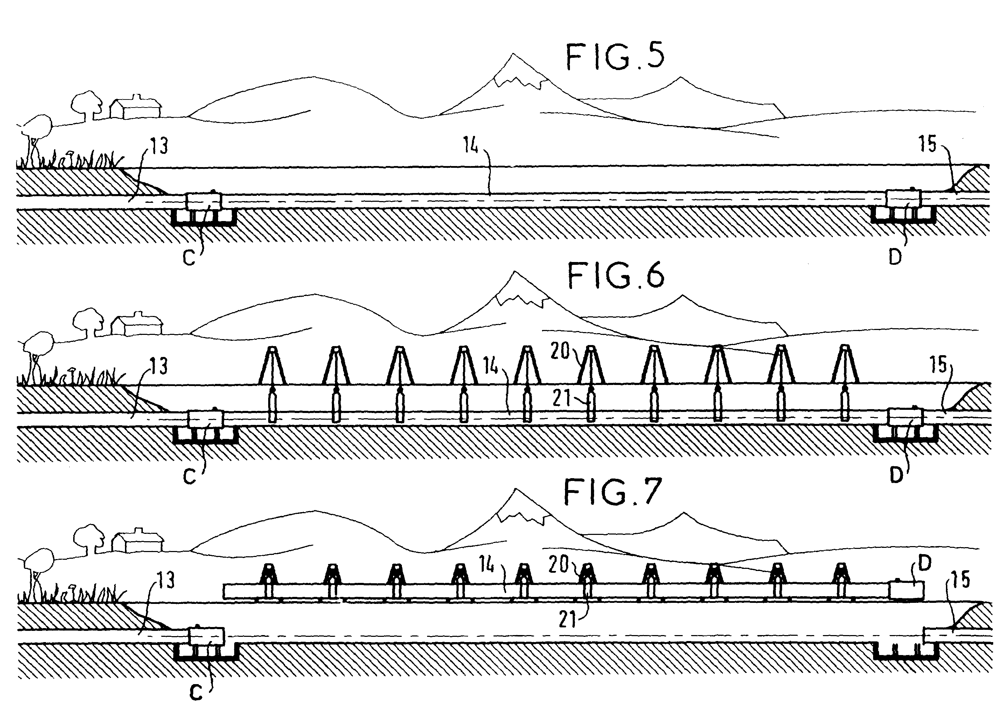

On peut alors commencer les opérations de dépose du tronçon CD, qui sont illustrées par les figures 5 à 7.

Tout d'abord, (Fig.5), la terre est déblayée autour du tronçon CD et autour des compartiments de démontage C et D qui l'encadrent, avec une largeur de tranchée de 2 à 3 mètres par exemple.

Des chevalets 20, disposés le long du tronçon de câble, portent des sangles 21 passées sous le câble (Fig. 6). En tirant sur ces sangles, (Fig.7), le tronçon, ainsi que son compartiment associé C est soulevé.

On peut alors le remplacer par un compartiment neuf, en effectuant les mêmes opérations en sens inverse.

On décrit maintenant la bride et sa vanne associée.

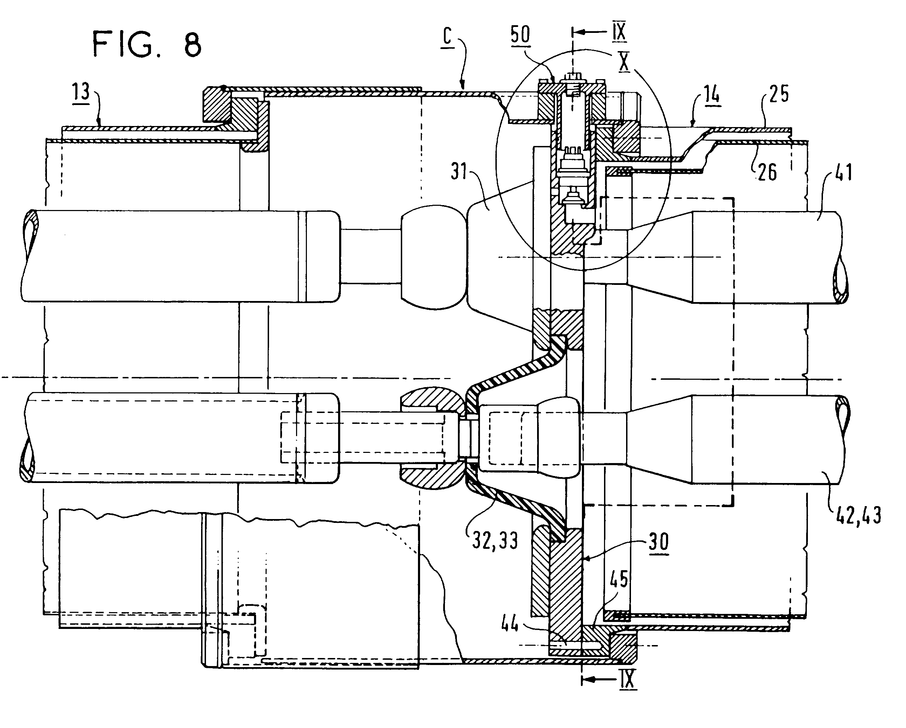

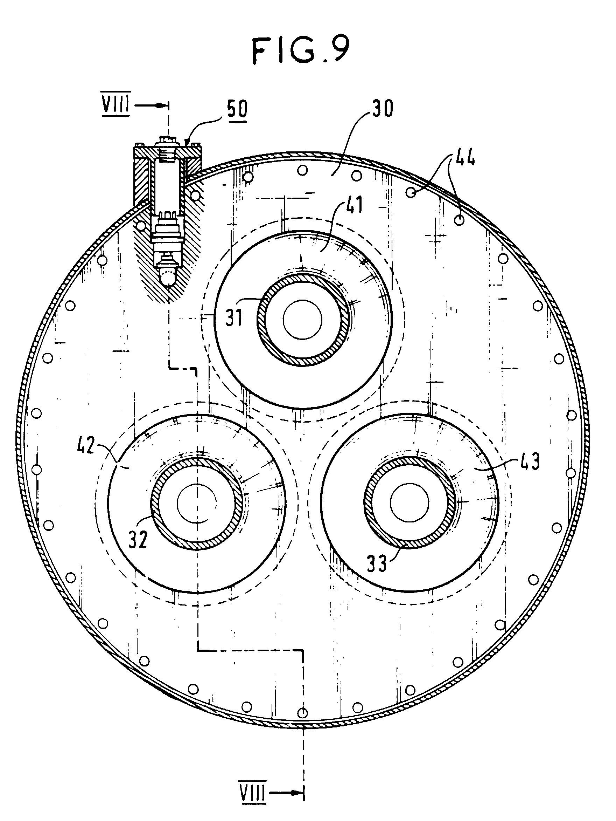

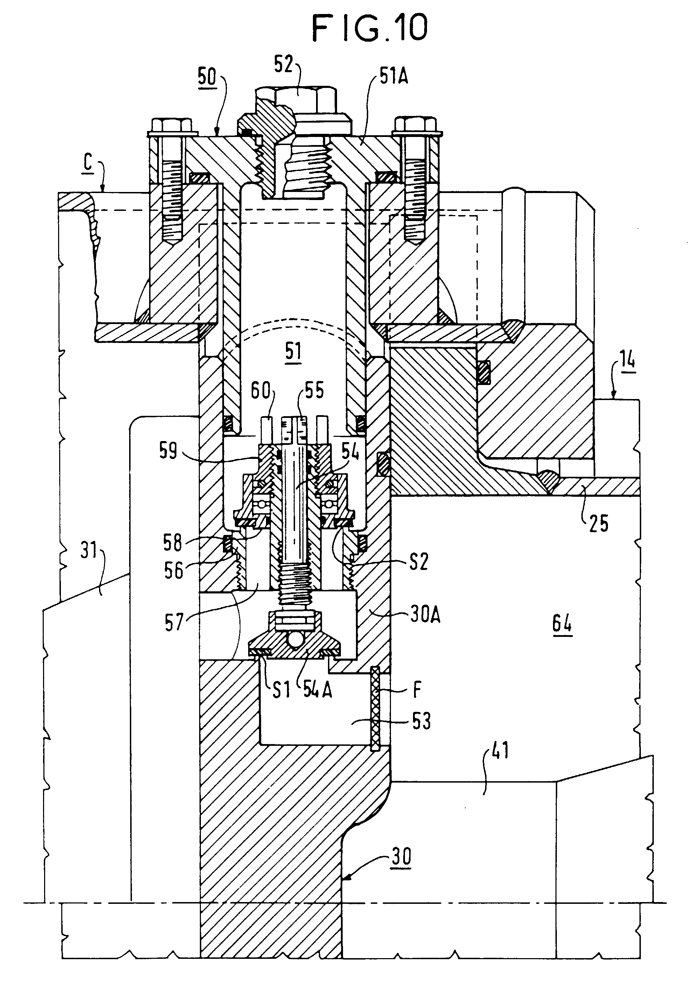

La figure 8 est une vue en coupe longitudinale d'un portion de câble avec son compartiment de démontage montrant la bride selon l'invention. On a représenté une partie des tronçons 13 et 14, reliés par le compartiment de démontage C qui fait partie du tronçon 14. On se référera également à la figure 9 qui est une vue en coupe selon la ligne IX-IX de la figure 8. On distingue, dans la figure 8, l'enveloppe en acier 25 et l'enveloppe en aluminium 26. Le compartiment de démontage comprend la bride de l'invention désignée globalement par la référence 30; elle porte trois cônes isolants fermés étanches 31 à 33, dont deux, 31 et 32, sont visibles dans la figure; les cônes servent de support aux conducteurs 41 à 43. La bride porte des alésages périphériques 44 pour sa fixation par vis à une couronne 45 soudée à l'enveloppe d'acier 25. A une partie de sa périphérie, la bride 30 présente une surépaisseur ou bossage, permettant de loger les éléments d'une vanne référencée globalement 50, comme il est expliqué maintenant en référence à la figure 10.

Comme on peut le voir dans la figure 10, la surépaisseur ou bossage 30A de la bride 30 comprend un alésage 51 permettant de loger les éléments de la vanne 50. Cet alésage est normalement obturé par un couvercle étanche 51A muni d'un bouchon 52. Pour accéder aux éléments de la vanne, il faut utiliser une première clé à manche, comme illustré dans la figure 2 pour dévisser le bouchon 52. La vanne comprend un premier passage 53, équipé d'un filtre F, (côté bossage), contre les poussières, permettant de faire communiquer entre eux les deux tronçons 13 et 14 séparés par la bride 30; ce passage peut être obturé par un clapet 54A s'appuyant sur le siège S1 constitué par un épaulement intérieur du bossage; le clapet est fixé à l'extrémité d'une tige 54 munie d'une extrémité 55 dans laquelle on peut engager une seconde clé disposée à l'extrémité d'un manche.

La tige 54 se visse à l'intérieur d'un alésage axial partiellement fileté d'une pièce cylindrique 56, elle-même vissée de manière étanche dans l'alésage 51. Des joints assurent l'étanchéité entre la tige 54 et la pièce 56. Cette dernière comprend des alésages périphériques 57 dont les orifices, constituant le siège S2, peuvent être obturés par un clapet 58 muni d'une tige 59 dont l'extrémité 60 peut être manoeuvrée au moyen d'une troisième clé à manche. La tige 59 se visse sur un filetage extérieur de la pièce 56. Des joints assurent l'étanchéité entre les pièces 52 et 59. En soulevant le siège S2, le volume 64 du compartiment 13 peut être mis à l'atmosphère.

Les extrémités respectives 55 et 60 des tiges 54 et 59 peuvent être constituées de rainures ou de dents, de pas différents.

Lorsqu'on a remplacé le tronçon défaillant par un tronçon neuf, il faut faire le vide dans les tronçons adjacents 13 et 14 afin d'enlever l'humidité et l'air atmosphérique avant le remplissage d'azote.

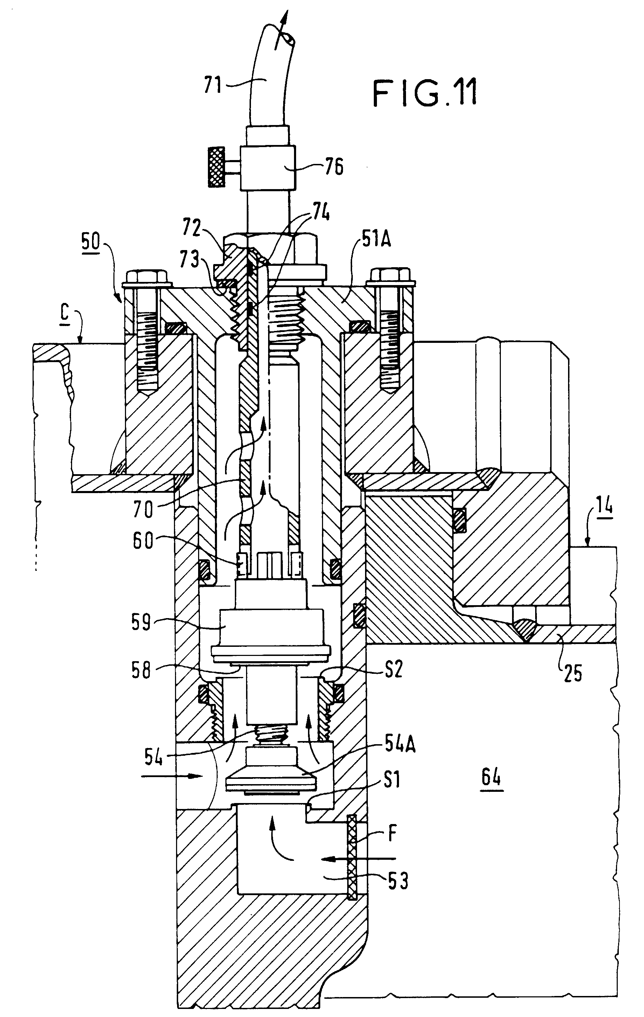

La figure 11 montre une quatrième clé spéciale, qui est engagée dans l'alésage 51 après dépose du bouchon 52.

Cette clé est constituée d'un tube 70 terminé à une extrémité par des dents pouvant coopérer avec l'extrémité 60 de la tige 59 du clapet 58 de siège S2, et dont l'autre extrémité peut recevoir de manière étanche un tube souple 71 reliée à une pompe à vide P.

Le tube 70 est engagé dans l'alésage 51 à la place du bouchon 52, avec interposition d'un manchon 72, fileté extérieurement et muni d'un joint 73; le manchon est de préférence en plastique tel que téflon ou rilsan (marques déposées); le tube 70 est muni d'une vanne 76 pouvant être manoeuvrée de l'extérieur. Des joints 74 assurent l'étanchéité entre le tube et le manchon.

Pour faire le vide dans le compartiment 14, (volume 64), le siège S1 étant fermé et le siège S2 étant ouvert, on ôte le bouchon 52, on visse le manchon 72 avec son joint 73; on engage le tube 70 jusqu'à venir en contact avec l'extrémité 60. On ouvre la vanne 76 et on met en route la pompe à vide.

Lorsque le vide est fait, on ferme la vanne 76, on déconnecte le tube 71 et on manoeuvre la clé 70 pour fermer le siège S2.

On peut alors retirer la quatrième clé.

Le remplissage en azote se fait en ouvrant le siège S1 au moyen de la deuxième clé, puis en ouvrant les sièges S1 de la vanne B et de la vanne D et, enfin, en ouvrant les sièges S1 de la vanne A et de la vanne E.

L'azote à la pression de 12000 hectopascals des autres tronçons en amont et en aval entre alors dans les tronçons AB, BC, CD, et DE à travers les filtres F

On règle la pression finale en ouvrant les vannes d'alimentation placées au départ ou à l'arrivée du câble.

Le remplissage en azote étant terminé, on retire la deuxième clé et on replace le bouchon 52.

L'invention est de construction simple et économique, et de grande sûreté de fonctionnement.

## Revendications

1. Bride à bossage destinée à équiper un compartiment d'assemblage (C) de deux tronçons adjacents (13,14) d'un câble triphasé à isolation gazeuse à longue distance, qui comprend dans un bossage (30A) un passage (53) d'une vanne commandable de l'extérieur mettant en communication les volumes intérieurs des deux tronçons adjacents, ledit passage pouvant être obturé au moyen d'un premier clapet (54A) s'appuyant sur un premier siège (S1) de la vanne constitué par un épaulement intérieur d'un alésage principal (51) qui s'étend suivant une direction axiale et qui s'ouvre sur l'extérieur, ledit clapet étant fixé à une première tige (54) débouchant dans ledit alésage (51) du côté extérieur, ladite première tige (54) se déplaçant par vissage à l'intérieur d'un alésage axial d'une pièce cylindrique (56) disposée axialement de manière fixe à l'intérieur de l'alésage principal (51), caractérisée en ce que ladite pièce cylindrique (56) est traversée par des alésages axiaux (57) débouchant d'une part dans ledit passage (53) et d'autre part dans l'alésage principal (51) du côté extérieur, une extrémité du côté extérieur desdits alésages axiaux constituant un second siège (S2) de la vanne obturable par un second clapet (58) fixé à une seconde tige (59) débouchant dans ledit alésage (51) du côté extérieur.

2. Une bride à bossage selon la revendication 1, dans laquelle la seconde tige (59) est un tube coaxial se vissant sur ladite pièce cylindrique (56).

3. Une bride à bossage selon la revendication 1 ou 2, dans laquelle l'alésage principal (51) est muni d'un couvercle étanche (51A) muni d'un bouchon (52) pouvant être retiré ou replacé au moyen d'une première clé.

4. Une bride à bossage selon revendication 1 ou 2, dans laquelle la première tige (54) est munie de moyen d'accouplement à une seconde clé manoeuvrable de l'extérieur.

5. Une bride à bossage selon la revendication 1 ou 2, dans laquelle la seconde tige (59) est munie d'un moyen d'accouplement à une troisième clé manoeuvrable de l'extérieur.

6. Une bride à bossage selon la revendication 1 ou 2,dans laquelle le bouchon (52) peut être remplacé par une quatrième clé constituée d'un tube (70) muni à une extrémité de moyens d'accouplement à l'extrémité (60) de ladite seconde tige (59) et à l'autre extrémité de moyens de liaison à une pompe à vide, ledit tube (70) étant muni de moyens (72,73) pour être fixé de manière étanche en lieu et place du bouchon (52) et d'une vanne (75) placée entre les moyens de liaison à la pompe à vide et les moyens de fixation étanche en lieu et place du bouchon.

## Patentansprüche

1. Trägerscheibe zur Ausrüstung eines Montageraumes (C) zweier aneinandergrenzender Teilstücke (13, 14) einer gasisolierten Dreiphasen-Fernleitung, welche in einer Scheibe einen Durchgang eines von außen steuerbaren Ventils (53) umfasst, das die inneren Volumina der zwei aneinandergrenzenden Teilstücke miteinander verbindet, wobei der Durchgang durch eine erste Klappe (54A) verschlossen werden kann, die an einem Sitz (S1) des Ventile gelagert ist, der durch einen inneren Absatz einer Hauptbohrung (51) gebildet ist, die sich entsprechend der Axialrichtung erstreckt und sich nach außen hin öffnet, wobei die Klappe an einem ersten Stift (54) gelagert ist, der von der Außenseite (51) in die Bohrung reicht, wobei der erste Stift (54) sich durch Schrauben in das Innere einer axialen Bohrung in einem zylindrischen Teil (56) bewegt, das fest im Inneren der Hauptbohrung (51) angeordnet ist, dadurch gekennzeichnet, dass das zylindrische Teil (56) von axialen Bohrungen (57) durchdrungen ist, die sich von der Außenseite einerseits in den Durchgang (53) öffnen und andererseits in die Hauptbohrung (51), wobei ein Ende der Außenseite dieser axialen Durchgänge einen zweiten Sitz (S2) des Ventils bildet, der durch eine zweite Klappe (58) verschließbar ist, die an einem zweiten Stift (59) befestigt ist, der von der Außenseite in die Bohrung (51) reicht.

2. Trägerscheibe nach Anspruch 1, bei der der zweite Stift (59) eine koaxiale Röhre ist, die sich über das zylindrische Teil (56) schraubt.

3. Trägerscheibe nach Anspruch 1 oder 2, bei der die Hauptbohrung (51) mit einer dichten Abdeckung (51A) versehen ist, die mit einem Stopfen (52) versehen ist, der durch einen ersten Schlüssel eingesetzt und herausgenommen werden kann.

4. Trägerscheibe nach einem der Ansprüche 1 oder 2, bei der der erste Stift (54) mit Einrichtungen zur Kopplung mit einem zweiten von außen zu bedienenden Schlüssel verbunden ist.

5. Trägerscheibe nach einem der Ansprüche 1 oder 2, bei der der zweite Stift (59) mit einer Einrichtung zum Koppeln mit einem dritten von außen zu bedienenden Schlüssel verbunden ist.

6. Trägerscheibe nach einem der Ansprüche 1 oder 2, bei der der Stopfen (52) durch einen vierten Schlüssel ersetzt sein kann, der aus einer Röhre (70) besteht, die an einem Ende mit Einrichtungen 2ur Kopplung mit dem Ende (60) des zweiten Stiftes (59) versehen ist, und am anderen Ende mit Einrichtungen zur Verbindung mit einer Vakuumpumpe versehen ist, wobei die Röhre (70) mit Einrichtungen (72, 73) zur Fixierung in dichter Weise an Ort und Stelle des Stopfens (52) versehen ist, und mit einem Ventil (75), angeordnet zwischen den Einrichtungen zur Verbindung mit der Vakuumpumpe und den Einrichtungen zur dichten Fixierung an Ort und Stelle des Stopfens.

## Claims

1. A joint with a boss for fitting to an assembly compartment (C) for assembling together two adjacent lengths (13, 14) of a long-distance gas-insulated three-phase cable, which joint includes a passage (53) of an externally-controllable valve inside a boss (30A) thereby putting the inside volumes of the two adjacent lengths into communication, said passage being capable of being closed by means of a first valve member (54A) bearing against a first seat (S1) of the valve constituted by a shoulder inside a main bore (51) which extends along an axial direction and which opens out to the outside, said valve member being fixed to a first rod (54) opening out into said bore (51) on the outside, said first rod (54) is moved by screwing inside an axial bore in a cylindrical part (56) disposed axially in stationary manner inside the main bore (51), said joint being characterized in that said cylindrical part (56) is pierced by axial bores (57) opening out firstly into said passage (53) and secondly into the main bore (51) on the outside, the outside ends of said axial bores constituting a second seat (S2) of the valve closable by a second valve member (58) fixed to a second rod (59) terminating in said bore (51) on the outside.

2. A joint with a boss according to claim 1, in which the second rod (59) is a coaxial tube that screws on said cylindrical part (56).

3. A joint with a boss according to claim 1 or 2, in which the main bore (51) is provided with a sealed cover (51A) fitted with a plug (52) capable of being withdrawn or replaced by means of a first wrench.

4. A joint with a boss according to claim 1 or 2, in which the first rod (54) is provided with engagement means for engaging a second wrench operable from the outside.

5. A joint with a boss according to claim 1 or 2, in which the second rod (59) is provided with engagement means for engaging a third wrench operable from the outside.

6. A joint with a boss according to claim 1 or 2, in which the plug (52) can be replaced by a fourth wrench constituted by a tube (70) provided at one end with means for engaging the end (60) of said second rod (59) and at its other end with means for connection to a vacuum pump, said tube (70) being provided with plug-replacement means (72, 73) for being fixed in sealed manner instead of and in the place of the plug (52), and a valve (75) placed between the means for connection to the vacuum pump and the plug replacement means.
